(19) **Europäisches Patentamt / European Patent Office / Office européen des brevets**

(11) **EP 2 999 584 B1**

(12) **FASCICULE DE BREVET EUROPEEN**

(45) Date de publication et mention de la délivrance du brevet:
**03.07.2019 Bulletin 2019/27**

(21) Numéro de dépôt: **14726396.6**

(22) Date de dépôt: **10.04.2014**

(51) Int Cl.:
*B29D 23/00* (2006.01)      *E21B 43/01* (2006.01)
*F16L 11/02* (2006.01)      *F16L 11/04* (2006.01)
*F16L 11/08* (2006.01)      *F16L 47/02* (2006.01)
*B32B 5/02* (2006.01)      *B32B 5/10* (2006.01)
*B32B 5/12* (2006.01)      *B32B 5/26* (2006.01)
*B32B 27/08* (2006.01)      *B32B 1/08* (2006.01)
*F16L 57/02* (2006.01)

(86) Numéro de dépôt international:
**PCT/FR2014/050877**

(87) Numéro de publication internationale:
**WO 2014/188095 (27.11.2014 Gazette 2014/48)**

(54) **TUYAU FLEXIBLE POUR LE TRANSPORT D'EAU DOUCE, ENSEMBLE POUR SON STOCKAGE ET ASSEMBLAGE DE PLUSIEURS TUYAUX**

SCHLAUCH FÜR DEN TRANSPORT VON FRISCHWASSER, SET ZUR AUFBEWAHRUNG DAVON UND ANORDNUNG AUS MEHREREN SCHLÄUCHEN

FLEXIBLE PIPE FOR TRANSPORTING FRESH WATER, SET FOR THE STORAGE THEREOF AND ASSEMBLY OF A PLURALITY OF PIPES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2013 FR 1354614**

(43) Date de publication de la demande:
**30.03.2016 Bulletin 2016/13**

(73) Titulaire: **BBLM Associes**
**92330 Sceaux (FR)**

(72) Inventeurs:
• **DAVELOOSE, Frank**
  **B-4802 Verviers (BE)**
• **LEBELLE, Claude**
  **F-78290 Croissy sur Seine (FR)**
• **MAYOR de MONTRICHER, Gilbert**
  **F-75016 Paris (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
EP-A1- 0 337 037          WO-A1-03/081105
WO-A2-2009/125330      FR-A1- 2 194 906
FR-A1- 2 254 746          FR-A1- 2 786 246
FR-A1- 2 983 934          GB-A- 2 254 063
GB-A- 2 327 997          US-A- 3 467 013
US-A- 3 918 782          US-A1- 2004 112 452
US-A1- 2012 118 397

• VIA MARINA: "Submariver® Transportation of water in large quantities and over long distances by underwater flexible pipe", INTERNET CITATION, 14 juin 2011 (2011-06-14), XP054975243, Extrait de l'Internet: URL:http://www.via-marina.com/fr/film.php?lang=gb [extrait le 2013-11-13]
• Félix Bogliolo: "Transportation of fresh water in large quantities and over long distances by underwater flexible pipeline", , 27 février 2009 (2009-02-27), pages 1-4, XP055035510, Extrait de l'Internet: URL:http://www.semide.net/media_server/files/N/7/via-marina_presentation.pdf [extrait le 2012-08-14]

**Description**

Est ici concerné un tuyau allongé suivant un axe, flexible, apte au transport d'eau douce, pouvant être enroulé longitudinalement sur un touret ou plié dans un conteneur, longitudinalement continu, de section circulaire lorsqu'il est mis sous une pression différentielle positive entre l'intérieur du tuyau et l'extérieur et dont la section peut s'écraser sur elle-même sous l'effet d'une pression différentielle négative.

Selon la définition commune, un tuyau est ici une canalisation souple, de section fermée.

Hors la capacité spécifique à transporter de l'eau douce, son diamètre, sa longueur et à être enroulé longitudinalement sur un touret ou plié dans un conteneur, un tuyau écrasable sur lui-même est décrit dans US 6926037.

Un problème existe, ici pris en compte, de compromis entre le poids du tuyau, sa manoeuvrabilité (stockage, déplacement, courbure...), son coût de fabrication/mise en oeuvre, sa capacité à transporter de grandes quantités d'eau douce (débit) et sa résistance mécanique (résistance à la pression, aux pliures, au déchirement..), avec pour avantage de n'avoir pas à gérer le problème de la corrosion de la(des) paroi(s) du tuyau par le fluide transporté.

L'alimentation massive en eau douce, de façon économiquement viable et écologiquement acceptable, est à cet égard un problème majeur à ce jour, non encore résolu. Le tuyau ici présenté doit en être un maillon essentiel qui permettra une alimentation en eau douce des régions côtières à des coûts permettant d'envisager une utilisation agricole et sans action notable sur l'écologie des bassins versants.

Pour cela, il a été proposé dans une vidéo « VIA MARINA: "Submariver® Transportation of water in large quantities and over long distances by underwater flexible pipe » que le tuyau présente un diamètre extérieur compris entre 1 et 7 mètres et une longueur comprise entre 200 et 3000 mètres, et comprenne une enveloppe étanche vis-à-vis du liquide transporté ainsi qu'au moins deux éléments de renfort périphériques accroissant de la résistance mécanique du tuyau à une pression différentielle positive et qui supporte sans éclater ou se fendre une pression différentielle positive de 1 à au moins 10 bars.

Ceci doit permettre de résister à une pose si nécessaire pour partie à terre pour partie immergée (typiquement en milieu marin), sur des fonds qui peuvent agressifs mécaniquement, à partir de tourets (solution enroulée) ou de conteneurs (solution pliée) de stockage, et à des profondeurs d'immersion pouvant atteindre plus de 100 voire plus de 1000 mètres.

D'autres enseignements de ce type sont connus du document FR-A1-2.786.246.

Selon l'invention, telle que définie par les caractéristiques techniques de la revendication 1, pour favoriser la résistance recherchée, l'enveloppe et les éléments de renfort sont en au moins un matériau thermoplastique renforcé par des fils, de telle sorte que le tuyau présente, en section, de l'intérieur vers l'extérieur :

- une première nappe textile à structure tricotée, tressée, tissée ou non-tissée, ayant des fils longitudinaux parallèles à l'axe longitudinal du tuyau, puis, autour de ladite première nappe textile,
- au moins une deuxième puis une troisième nappes textiles chacune :

    * à structure tricotée, tressée, tissée, non-tissée ou unidirectionnelle,
    * enroulée longitudinalement en hélice, le long de l'axe du tuyau, et
    * ayant des fils longitudinaux parallèles à la génératrice de l'hélice.

Ceci doit en particulier combiner étanchéité, poids maîtrisé, résistances à la pression, aux pliures, au déchirement.

Prévoir un diamètre de tuyau compris entre 1 et 5 mètres, et de préférence (pour un compromis débit/masse par mètre linéaire/résistance à la pression) 4 à 5 mètres (à 20% près), qui permettra par ailleurs un compromis utile entre débit, résistance mécanique et stockage.

Prévoir une longueur de tuyau comprise entre 300 et 1000 mètres diamètre permettra par ailleurs un compromis utile entre stockage, rapidité de mise en oeuvre (zones d'aboutement entre deux tronçons successifs moins nombreuses qu'avec des longueurs plus courtes), poids des tourets d'enroulement ou des conteneurs de pliage permettant leurs manutentions par grutage sur ou entre navires de surface, en mer.

Même dernier avantage avec un tuyau ayant une masse par mètre linéaire comprise entre 14 kg/ml et 320 kg/ml, selon le diamètre et la pression d'éclatement, avec en outre alors un compromis entre poids (lest à l'immersion depuis le navire de surface concerné où est alors disposé de tuyau) et résistance mécanique.

De la même manière, la tenue mécanique à l'écrasement et aux courbures, torsions ou flexions subies au stockage ou lors des manutentions, notamment de la pose, conduisent d'ailleurs à recommander que :

- le titre des fils longitudinaux soit compris entre 200 et 8500 Tex,
- et le nombre de ces fils longitudinaux soit inférieur à 3 fils par cm.

En effet, lorsque qu'un tuyau est installé à l'air libre, l'absence de pression extérieure permet d'utiliser un tel tuyau à paroi(s) souple(s), la pression intérieure de fonctionnement restant supérieure à la pression atmosphérique ambiante. Lorsqu'un tuyau de cette nature est à installer sur le fond marin, la pression interne du fluide transporté doit permettre de maintenir la section du tuyau ouverte. Dans ces conditions, il n'est pas nécessaire d'utiliser une structure résistante à la pression externe, celle-ci étant contrebalancée par la pression interne. Par contre, la structure du tuyau doit être résistante à la pression interne maximum de service de l'installation et doit être de préférence autoporteuse pendant son installation.

En évitant de devoir résister à l'écrasement dû aux charges extérieures, on évite de dépenser de la matière et on obtient de ce fait une structure plus économique, de là l'intervalle de masses par mètre linéaire que l'on peut atteindre.

Les avantages ci-dessus sont également atteints en prévoyant que :

- l'épaisseur de la paroi tubulaire (de section fermée) du tuyau soit comprise entre 6 et 17 millimètres, selon le diamètre et la pression d'éclatement,
- et/ou que l'inégalité suivante soit respectée:

$$\frac{T}{P} \leq \mu.\pi.R^2$$

avec

$$\mu = 0,9$$

T : tension axiale de rupture sous pression différentielle nulle,
P : pression différentielle d'éclatement (Pi-Pe) entre l'intérieur et l'extérieur du tuyau, avec Pi : pression interne du tuyau et Pe : pression externe,
R : rayon interne du tuyau sous pression différentielle positive.

Pour un compromis entre prix/poids/ flexibilité/résistance mécanique, on recommande que la pression différentielle positive d'éclatement du tuyau soit comprise entre 3 et 30 x 10$^5$ Pa.

Dans le même but, on recommande par ailleurs que le tuyau soit :

- déformable entre une section interne circulaire et une section interne aplatie où deux zones opposées du périmètre interne se touchent,
- et pliable sur lui-même longitudinalement suivant un ruban aplati présentant, à l'endroit des pliures, un rayon de courbure inférieur ou égal à 50 cm,

sans que la pression d'éclatement ni la tension de rupture axiale sous pression différentielle nulle du tuyau soient modifiées de plus de 5%:

- par le passage de la section interne circulaire à la section interne aplatie et inversement,

- et par le pliage sur lui-même longitudinalement du tuyau, suivant ledit ruban aplati, et son dépliage à plat.

Est également concerné, outre le tuyau, un ensemble selon l'une des trois solutions suivantes qui permettent une utilisation opérationnelle rapide du tuyau, sans risquer qu'il s'endommage lors de son stockage, cet ensemble comprenant :

- soit :

  * un tuyau ayant au moins, des caractéristiques qui précèdent, celles de la revendication 1,

  * et un touret autour duquel est enroulé ledit tuyau, à plat ou dans un état immédiatement proche d'un tel état à plat, non replié sur lui-même perpendiculairement à son axe longitudinal, le touret présentant une largeur orientée perpendiculairement à l'axe longitudinal dudit tuyau, cette largeur étant supérieure au demi-périmètre du tuyau dans un état circulaire de la section de ce tuyau,

- soit :

  * un tuyau ayant au moins, des caractéristiques du tuyau qui précèdent, celles de la revendication 1,

  * et un touret autour duquel est enroulé ledit tuyau, avec sa section aplatie, replié sur lui-même perpendiculairement à son axe longitudinal, le touret présentant une largeur orientée perpendiculairement à l'axe longitudinal dudit tronçon de tuyau, cette largeur étant inférieure au demi-périmètre du tuyau dans un état circulaire de la section de ce tuyau,

- soit :

  * un tuyau ayant au moins, des caractéristiques du tuyau qui précèdent, celles de la revendication 1,

  * et un conteneur dans lequel le tuyau est plié en accordéon.

Est par ailleurs aussi concerné l'assemblage de plusieurs tuyaux ayant tout ou partie des caractéristiques qui précèdent, aboutés deux à deux à l'endroit d'une zone de soudage où au moins une partie des matériaux thermoplastiques précités des tuyaux ont fusionné.

Suit une présentation des figures fournies à titre d'exemple, comme la description qui suit également, à titre de mode(s) possible(s) de réalisation :

- Figure 1 : schéma de côté du tuyau,
- Figure 2 : renforts filamentaires de la base tricotée, tressée, tissée ou non-tissée 2 de la structure textile étanche enduite 1 du tuyau,
- Figures 3a, 3b : sections III-III du tuyau de la figure 1, dans des états respectivement écrasé sur lui-même et sous pression (au rond) ; les fils de renfort ne sont pas illustrés,
- Figure 4 : schéma de côté du tuyau, avec ses différentes couches concentriques et le possible mandrin central de fabrication,
- Figures 5a, 5b : tronçons partiels respectivement, en perspective et coupe, de la structure textile étanche enduite 1 du tuyau,
- Figure 6 : tronçon en coupe longitudinale du tuyau 11,
- Figure 7 : renforts filamentaires de la base tricotée, tressée, tissée ou non-tissée 50 des couches de renfort 5a, 5b du tuyau,
- Figures 8a, 8b : tuyau 11 enroulé autour d'un touret de stockage/manutention, suivant deux modes alternatifs d'enroulement,
- Figure 9 : tuyau 11 plié en accordéon dans un conteneur de stockage/manutention,
- Figure 10 : tuyaux 11 aboutés, coaxialement, avec emboîtement longitudinal partiel.

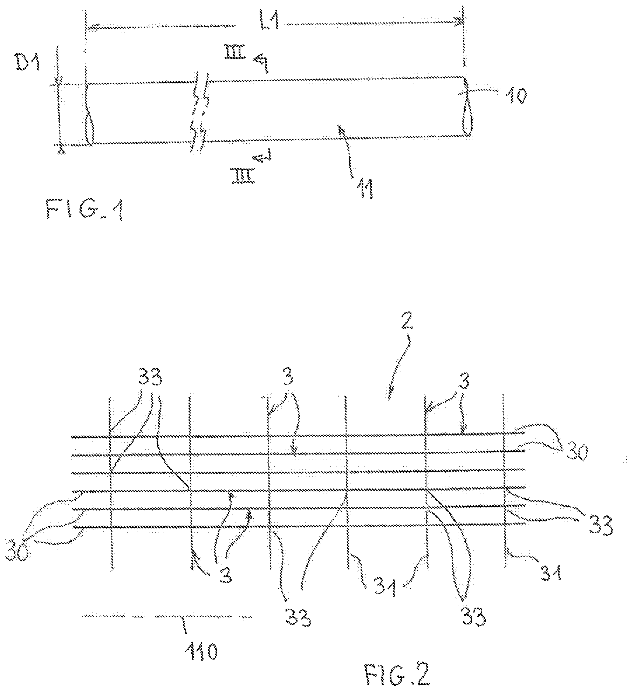

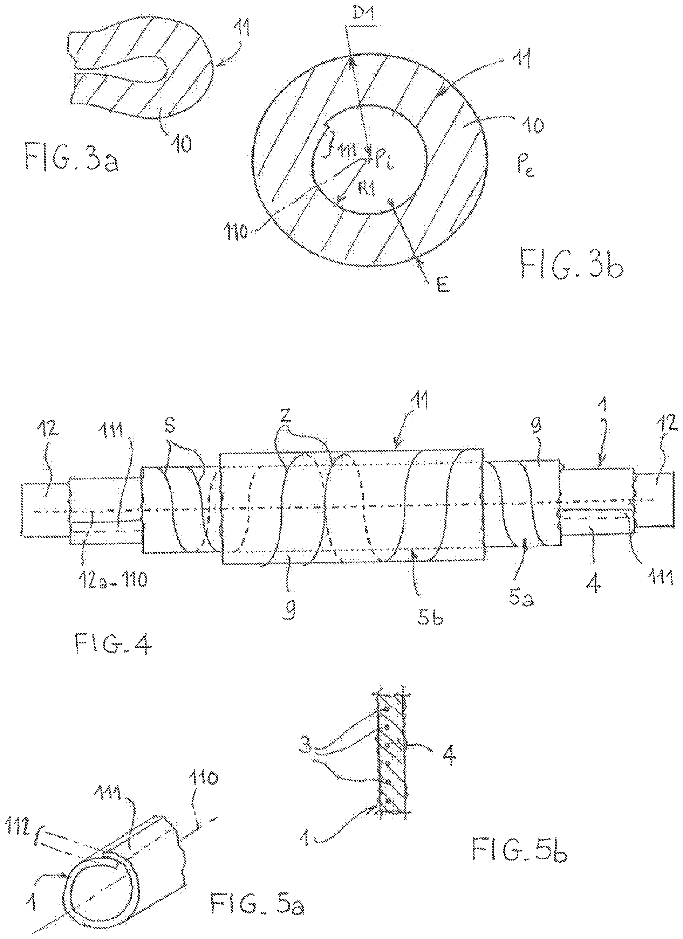

La paroi 10 de section fermée du tuyau 11 présente une structure textile étanche enduite 1 constituée d'une base tricotée, tressée, tissée ou non-tissée 2, incorporant des fils longitudinaux de renfort 3 (voir figures 1, 2, 7 notamment). Chaque laize ainsi réalisée est ensuite enduite d'un matériau thermoplastique 4 sur ses deux faces afin de la rendre imperméable au fluide transporté et aux fluides environnants (eau de mer en particulier) ; voir figure 4.

Pour sa fabrication, on recommande que la structure textile étanche enduite 1 soit réalisée à plat, en bande, puis conformée en tube et thermo-soudée longitudinalement. Il y aura alors favorablement recouvrement 111 des bords (longitudinaux) selon au moins une génératrice ; voir figure 5a. Ceci améliorera la résistance mécanique et la sécurité d'étanchéité.

Autour, cette structure textile étanche enduite, est renforcée par l'application de deux, ou plus de deux, couches telles 5a, 5b constituées chacune de bandes de renfort appliquées en hélices croisées (S et Z) à un angle spécifié; voir figure 4.

Les bandes de renfort 5a, 5b sont constituées de fils de renfort hélicoïdaux 8 de haute ténacité noyés dans une matrice 9 constituée du même matériau thermoplastique que celui de la structure textile étanche 4 ou d'un matériau thermoplastique compatible avec celui-ci pour être fusionné avec lui ; voir figures 4,6,7.

On conseille que les bandes de renfort 5a, 5b soient fixées sur (autour de) la structure textile étanche enduite 1 par thermo-soudure, de manière à provoquer la fusion des matériaux thermoplastiques 4 et 9 des surfaces en contact et former ainsi une structure tubulaire renforcée par des fils à haute ténacité selon des hélices croisées. L'angle des hélices est mesuré entre la direction de la bande de renfort et la direction perpendiculaire à l'axe du tube.

Le choix pertinent des matériaux thermoplastiques 4 et 9 de la structure textile étanche enduite et des fils de renfort 3,8 permet de réaliser un assemblage des différents éléments, par fusion des couches en contact, sans que les constituants 1, 2, 3, 4, 8 ne soient affectés chimiquement ou mécaniquement.

Le choix judicieux des différents paramètres géométriques permet de constituer une structure résistante à une pression interne spécifiée et à une tension axiale pure spécifiée sans augmenter la quantité de fils de renforts nécessaires par rapport au seul cas de résistance à la pression interne.

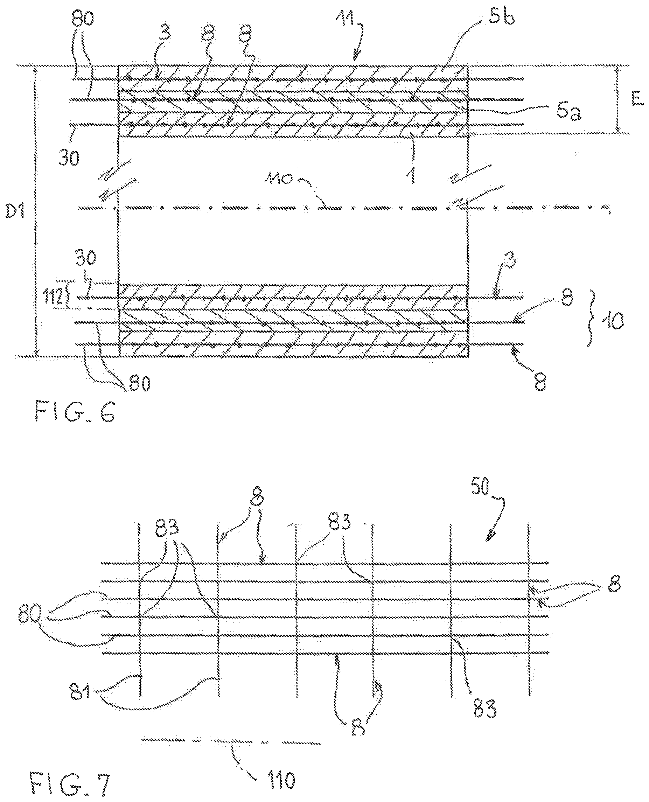

Au sein de chaque structure textile, les fils de renfort 3,8 comprendront de préférence, pour l'équilibre et la maîtrise des contraintes, des fils de chaine et de trame, respectivement 30,31 et 80,81 ; cf. figures 2,7. On conseille qu'à chaque intersection de la chaine et de la trame, des fils, respectivement 33,83, relient les deux nappes. Ces fils de liage 33,83 entre chaine et trame sont représentés figures 2,7 où seuls ces fils de chaine et trame sont représentés. Les bases textiles utilisées pour la chambre à eau et les bandes en hélice seront de préférence les mêmes, seuls changeront alors les caractéristiques des fils de chaine et trame, leur titre et leur jauge. La nappe textile peut être également dépourvue de fils de trame.

Jusqu'à une différence de pressions entre l'intérieur (Pi) et l'extérieur (Pe) du tuyau 11 de 30 bars (30x10$^5$ Pa), une structure du type qui précède est susceptible de collapser (s'écraser sur elle-même, en section ; cf. figure 3a) sans dommages lorsque la pression extérieure qui lui est appliquée est supérieure à la pression du fluide (typiquement eau) situé à l'intérieur du tuyau flexible.

Précisément, le collapse est un flambement de la paroi au sens de la résistance des matériaux et dépend essentiellement de la géométrie et des modules d'élasticité des matériaux employés. On constate généralement que la résistance au collapse requiert nettement plus de matière pour la résistance externe du tuyau que pour la résistance à la pression interne (Pi).

La structure retenue permet d'envisager une production continue, et non plus discrète, et autorise de grandes longueurs de tuyau flexible d'un seul tenant, de 500 mètre à plusieurs kilomètres selon le diamètre et la pression de service et les conditions retenues pour le transport du produit.

Pour une facilité de manutention lors des transports terrestres et lors de l'installation en mer on recommande une longueur de tuyau d'un seul tenant compris entre 300 et 700 mètres.

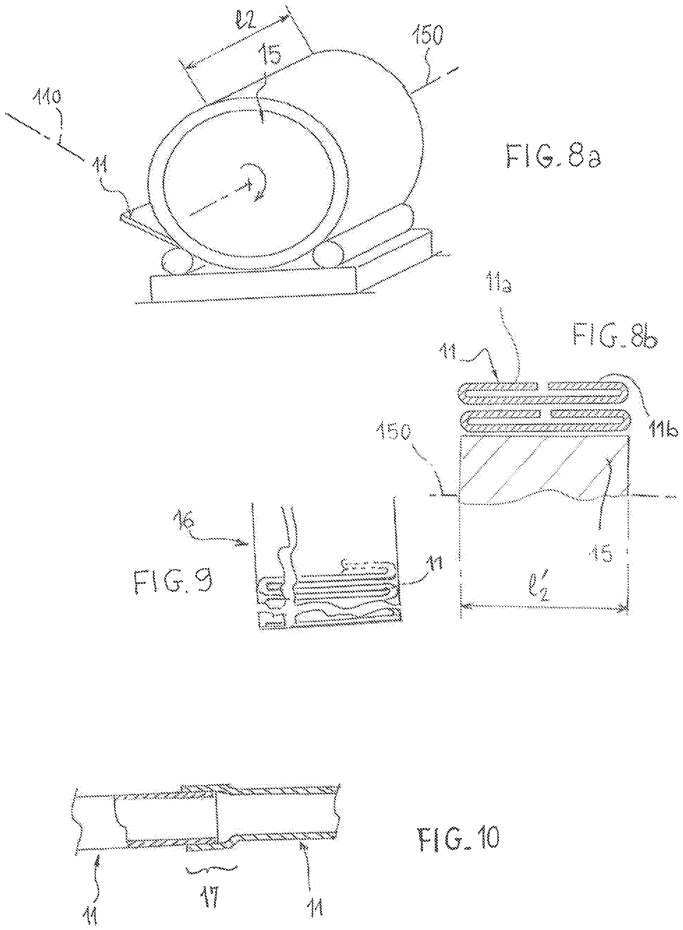

Pour cela, le tube passe autour d'un mandrin circulaire 12 (figure 4) autour duquel des banderoleuses vont appliquer les bandes 5a, 5b en hélices croisées audit angle spécifié. Le tuyau 11 ainsi constitué est souple et peut être enroulé à plat ou replié, avec des rabats latéraux, sur un touret 15, ou plié de préférence en couches alternées (accordéon) dans un conteneur 16 ; voir figures 8,9.

Selon ce processus de fabrication, le tuyau 11 conserve son orientation sur le mandrin tout en avançant sur son axe. Les bobines qui délivrent les bandes de renfort sont disposées sur un support qui tourne autour de l'axe du tuyau. De ce fait la production peut être affranchie de la nécessité de faire tourner le tube sur son axe pendant l'application des bandes de renfort, et permet de s'affranchir des limitations de longueurs correspondantes.

Le tuyau flexible 11 de grande longueur faisant l'objet de la présente invention peut être utilisé comme une canalisation conventionnelle entre les points de départ et d'arrivée du transport d'un fluide déterminé. Ce tuyau flexible peut être placé à l'air libre, posée sur une fondation ou plongé dans un fluide (typiquement eau de mer) à une pression inférieure à la pression de fonctionnement de la canalisation, maintenant ainsi sa section circulaire. Selon la masse volumique du fluide extérieur, la canalisation est posée sur ou retenue par sa fondation.

Le tuyau 11 est susceptible d'être appliqué de manière industrielle au transport d'eau douce en milieu marin. Dans le cas où on désire transporter de l'eau depuis une prise d'eau située sur terre entre deux points d'une côte marine, ce tuyau flexible de grande longueur peut être installé sur le fond marin avec un système de fondations adéquat permettant de résister aux efforts hydrodynamiques et sismiques et permettant ainsi le transport de grandes quantités d'eau douce entre deux zones.

Est aussi possible le transfert d'eau douce interbassins par canaux terrestres, afin d'éviter des pertes importantes liées à l'infiltration dans le sol et à l'évaporation de la surface libre exposée à ciel ouvert dans des régions chaudes et arides où l'évaporation est élevée. Le tuyau flexible 11 peut alors aussi être inséré dans le fond d'un de ces canaux, pour permettre de transporter de l'eau sans exposer sa surface libre, ce qui évite toute évaporation ou infiltration durant le transport.

Comme illustré, le tuyau 11 obtenu est donc allongé suivant l'axe 110, flexible et apte au transport d'eau douce.

Il peut donc être enroulé longitudinalement sur un touret ou plié de préférence en accordéon dans un conteneur.

Il est longitudinalement continu et de section circulaire lorsqu'il est mis sous une pression différentielle positive entre l'intérieur et l'extérieur, sa section fermée pouvant s'écraser sur elle-même sous l'effet d'une pression différentielle négative.

Comme caractéristiques notoires, on a déjà noté :

- un diamètre extérieur D1 compris entre 1 et 7 mètres et une longueur (continue) L1 comprise entre 200 et 3000 mètres,

- une enveloppe 1 (appelée ci-avant structure textile enduite) étanche vis-à-vis du liquide transporté ainsi qu'au moins deux éléments de renfort périphériques (bandes de renfort 5a, 5b étanches ou non à l'eau), accroissant la résistance mécanique du tuyau à une pression différentielle positive (surpression extérieure en immersion) et qui supporte sans éclater ou se fendre une pression différentielle positive de 1 à au moins 10 bars (10 x $10^5$ Pa).

Compte tenu de la fabrication conseillée, l'enveloppe 1 et les éléments de renfort 5a,5b seront donc favorablement en au moins un matériau thermoplastique tel que des plastomères de polyoléfines, de préférence de type LLDPE, métallocènes de chaines à 8 carbones ou des plastomères polyuréthanes ou encore « des nano-crystal structure controlled elastomer » (élastomères à structure nanocristalline contrôlée), renforcé par les fils 3,8, de telle sorte que le tuyau présentera donc favorablement, en section, de l'intérieur vers l'extérieur, au sein du matériau thermoplastique :

- une première nappe textile à structure tricotée, tressée, tissée ou non-tissée 2, ayant des fils longitudinaux 30 parallèles à l'axe longitudinal 110 du tuyau, puis, autour de cette première nappe textile (1) et au sein du matériau thermoplastique (le même ou un autre intimement lié au premier, typiquement par fusion),

- au moins une deuxième puis une troisième nappes textiles enduites, respectivement 5a, 5b, chacune :

    * à structure tricotée, tressée, tissée, non-tissée ou unidirectionnelle 50,
    * enroulée longitudinalement en hélice, le long de l'axe du tuyau, et,
    *présentant les fils longitudinaux 8 parallèles à la génératrice de l'hélice.

Si elle existe, la zone 111 de recouvrement du matériau thermoplastique par lui-même réalisée lors de la mise au rond de la bande initiale de matière sera donc formée sensiblement à l'endroit du diamètre du tuyau (voir zone ou portion radiale 112, figure 5a, 6) où se situe la première nappe textile 1. Une fois le tuyau fabriqué, et donc les couches concentriques de matériau(x) thermoplastique(s) soudées entre, une surépaisseur (ou une marque de bord) pourra encore apparaître en surface intérieure, comme cela est schématisé figure 3b, en zone 111.

Pour un compromis entre flexibilité, résistance à la pression et débit, le diamètre D1 sera favorablement compris entre 1 et 5 mètres.

Quant à la longueur L1, on la recommande donc comprise entre 300 et 1000 mètres. La technique de fabrication par enroulement autour d'un mandrin central l'autorise.

Pour allier résistance mécanique/vitesse de fabrication/poids limité, on conseille en outre que, sur ce tuyau :

- le titre des fils longitudinaux 3,8 soit compris entre 200 et 8500 Tex,
- et le nombre de ces fils longitudinaux soit inférieur à trois fils par cm.

Et la tenue à la pression que l'on doit atteindre en service, pour une immersion sous-marine possible à plus de 100 mètres, invite, pour assurer une intégrité physique du tuyau, sans éclatement, à ce que le tuyau tienne jusqu'à une pression d'éclatement comprise entre 20 et 30 x 10$^5$ Pa, de préférence.

Compte tenu de ces conditions opérationnelles de pose en milieu sous-marin, avec courbure longitudinale et /ou latérales à prévoir, on recommande que la masse par mètre linéaire de la paroi 10 du tuyau 11 soit comprise entre 14 kg/ml et 320 kg/ml, selon le diamètre et la pression d'éclatement, et de préférence 14 Kg/ml et 175 Kg/ml.

On recommande aussi que la paroi tubulaire 10 ait une épaisseur E (figure 3b) comprise entre 6 et 17 millimètres, selon le diamètre et la pression d'éclatement.

Pour la tenue mécanique opérationnelle, il est aussi conseillé que la paroi 10 respecte l'inégalité suivante :

$$\frac{T}{P} \leq \mu.\pi.R^2$$

avec μ = 0,9,

T : tension axiale de rupture sous pression différentielle (Pi-Pe) nulle,
P : pression différentielle (Pi-Pe) d'éclatement, avec donc Pi : pression interne du tuyau et Pe : pression externe ;
R : rayon interne R1 (figure 3b) du tuyau sous pression différentielle positive (pression interne supérieure à la pression extérieure) .

Le respect de tout ou partie des caractéristiques techniques de ce tuyau vise à ce qu'il soit, sans être affecté dans ses fonctionnalités, pression d'éclatement et tension de rupture axiale sous pression différentielle nulle :

- déformable entre une section interne circulaire et une section interne aplatie où deux zones opposées du périmètre interne se touchent,
- et pliable sur lui-même longitudinalement suivant un ruban aplati présentant, à l'endroit des pliures, un rayon de courbure inférieur ou égal à 50 cm, sans que la pression d'éclatement ni la tension de rupture axiale sous pression différentielle nulle du tuyau soient modifiées de plus de 5%:

- ni par le passage de la section interne circulaire à la section interne aplatie et inversement,
- ni par le pliage sur lui-même longitudinalement du tuyau, suivant ledit ruban aplati, et son dépliage à plat.

Figure 8a, on voit un tuyau 11 enroulé autour du touret 15, à plat ou dans un état immédiatement proche d'un tel état à plat, non replié sur lui-même perpendiculairement à son axe longitudinal 110, le touret présentant une largeur 12 orientée perpendiculairement à l'axe longitudinal dudit tuyau, cette largeur étant supérieure au demi-périmètre du tuyau dans un état circulaire de la section de ce tuyau.

Pour limiter l'encombrement, on pourra toutefois préférer que les côtés longitudinaux 11a, 11b du tuyau 11 vide, (sensiblement) aplati pour son stockage, soient rabattus l'un vers l'autre, en portefeuille, comme montré figure 8b, évitant ainsi que la structure du tuyau soit écrasée complètement à plat. Le touret présentera alors (parallèlement à l'axe de rotation 150) une largeur 12' de préférence inférieure au demi-périmètre du tuyau dans l'état circulaire de la section de ce tuyau.

Pour enrouler ou dérouler le tuyau, le touret tourne sur lui-même autour d'un axe 150 perpendiculaire à l'axe 110 longitudinal du tuyau.

Figure 9, on voit maintenant un tuyau 11 et un conteneur 16 dans lequel le tuyau est plié en accordéon et stocké.

Quant à la figure 10, elle montre plusieurs tuyaux 11 aboutés deux à deux à l'endroit d'une zone 17 de soudage où au moins une partie des matériaux thermoplastiques des tuyaux ont fusionné. La zone 17 définira de préférence une zone d'aboutement avec recouvrement longitudinal l'une par l'autre des extrémités des tuyaux, sur une distance variable suivant les cas de figures, typiquement de 50cm à 2m.

Au titre des avantages ou problèmes résolus par le tuyau ci-avant présenté et considéré dans tout ou partie de ses caractéristiques, on relèvera encore ce qui suit :

- le tuyau 11 est un tuyau de grand diamètre,
- il peut être fabriqué dans des diamètres jusque-là jamais atteints (4 mètres et plus)
- il peut être fabriqué, avec des épaisseurs de paroi périphérique et des coûts raisonnables, pour résister à des surpressions internes allant jusqu'à 30 x 10$^5$ Pa,
- il est en produits composites, flexible et écrasable sur lui-même sans dommage.

Du fait de cette dernière propriété il est possible de transporter le tuyau vers le site d'installation sous un volume réduit, ce qui réduit les coûts de transport.

Par ailleurs, plus globalement :

- le tuyau inséré dans un système de transport d'eau (canal, conduite rigide ...) ne souffrira pas d'un coup de bélier négatif, engendré par un arrêt intempestif de la pompe d'expédition (qui fait circuler le liquide dans le tuyau), alors qu'un tube à section rigide risque de s'écraser sur lui-même de façon plastique, voire destructive, entrainant donc des dommages irréparables à sa structure. Pour résister à un coup de bélier négatif, un tube à section rigide doit employer des épaisseurs de matériau incompatibles avec l'économie d'un projet de transport d'eau douce,
- la longueur à poser des tuyaux de transport d'eau douce se chiffre en centaines voire milliers de kilomètres. Pour installer de telles canalisations dans des délais raisonnables, le tuyau doit être fabriqué à une cadence très élevée, de 5 à 10 km/jour. La structure en hélice multicouches permet de répartir la production des composants de l'assemblage sur différents sites de production des composants et réduit la durée de la phase d'assemblage, tout en ayant l'assurance d'un tenue mécanique appropriée (voir ci-avant),
- pour poser le tuyau en mer dans des délais raisonnables, il faut minimiser le nombre de soudures à réaliser sur le chantier, en mer, sur le (s) navire(s). La grande longueur élémentaire de chaque segment fabriqué permet de constituer des longueurs de plusieurs segments à bord du bateau d'installation et permet de réduire ce nombre de soudures et d'accélérer la cadence de pose jusqu'à des valeurs de 6 à 8 km/jour pour un tube de 4m de diamètre. Il en résulte un rythme d'installation élevé par comparaison avec les techniques de pose existantes (typiquement une dizaine de mètres).

**Revendications**

1. Tuyau (11) allongé suivant un axe, flexible, apte au transport d'eau douce, pouvant être enroulé longitudinalement sur un touret (15) ou plié dans un conteneur (16), longitudinalement continu, de section circulaire lorsqu'il est mis sous une pression différentielle positive entre l'intérieur du tuyau et l'extérieur, dont la section peut s'écraser sur elle-même sous l'effet d'une pression différentielle négative, le tuyau présentant un diamètre extérieur (D1) compris entre 1 et 7 mètres et comprenant une enveloppe (1) étanche vis-à-vis du liquide transporté, **caractérisé en ce qu'**il présente une longueur (L1) comprise entre 200 et 3000 mètres, et comprend au moins deux éléments de renfort (5a,5b) périphériques accroissant la résistance mécanique du tuyau à une pression différentielle positive et qui supporte sans éclater ou se fendre une pression différentielle positive de 1 à au moins 10 x 10⁵ Pa,

 **caractérisé en ce que** l'enveloppe et les éléments de renfort (5a,5b) sont en au moins un matériau thermoplastique renforcé par des fils (3,8), de telle sorte que le tuyau présente, en section, de l'intérieur vers l'extérieur, au sein du matériau thermoplastique:

   - une première nappe textile (1) à structure tricotée, tressée, tissée ou non-tissée (2), ayant des fils longitudinaux (30) parallèles à l'axe longitudinal (110) du tuyau, puis, autour de ladite première nappe textile (1),
   - au moins une deuxième puis une troisième nappes textiles (5a, 5b) chacune :

    * à structure tricotée, tressée, tissée, non-tissée ou unidirectionnelle (2),
    * enroulée longitudinalement en hélice, le long de l'axe (110) du tuyau, et
    * ayant des fils longitudinaux (80) parallèles à la génératrice de l'hélice.

2. Tuyau (11) selon la revendication 1 présentant un diamètre extérieur (D1) compris entre 1 et 5 mètres.

3. Tuyau (11) selon l'une quelconque des revendications précédentes **caractérisé en ce que** sa longueur (L1) est comprise entre 300 et 1000 mètres.

4. Tuyau (11) selon l'une quelconque des revendications précédentes, ayant une masse par mètre linéaire comprise entre 14 kg/ml et 320 kg/ml, selon le diamètre et la pression d'éclatement.

5. Tuyau (11) selon l'une quelconque des revendications précédentes, ayant une paroi tubulaire (10) d'une épaisseur (E) comprise entre 6 et 17 millimètres, selon le diamètre et la pression d'éclatement.

6. Tuyau (11) selon l'une quelconque des revendications précédentes, respectant l'inégalité suivante :

$$\frac{T}{P} \leq \mu . \pi . R^2$$

avec :

$$\mu = 0{,}9$$

T : tension axiale de rupture sous pression différentielle nulle,
P : pression différentielle d'éclatement entre l'intérieur et l'extérieur du tuyau,
R : rayon interne du tuyau sous pression différentielle positive.

**7.** Tuyau (11) selon l'une quelconque des revendications précédentes, ayant une différentielle positive d'éclatement comprise entre 3 et 30 x 10$^5$ Pa.

**8.** Tuyau (11) selon l'une quelconque des revendications précédentes, qui est :

- déformable entre une section interne circulaire et une section interne aplatie où deux zones opposées du périmètre interne se touchent,
- et pliable sur lui-même longitudinalement suivant un ruban aplati présentant, à l'endroit des pliures, un rayon de courbure inférieur ou égal à 50 cm,

sans que la pression d'éclatement ni la tension de rupture axiale sous pression différentielle nulle du tuyau soient modifiées de plus de 5% :

• par le passage de la section interne circulaire à la section interne aplatie et inversement,
• et par le pliage sur lui-même longitudinalement du tuyau, suivant ledit ruban aplati, et son dépliage à plat.

**9.** Tuyau (11) selon l'une quelconque des revendications précédentes, dans lequel :

- le titre des fils longitudinaux (3,8) est compris entre 200 et 8500 Tex,
- et le nombre des fils longitudinaux est inférieur à trois fils par cm.

**10.** Tuyau (11) selon l'une quelconque des revendications précédentes, dans lequel, sensiblement à l'endroit du diamètre (112) où se situe la première nappe textile (1), la première nappe textile présente une zone (111) de recouvrement par elle-même dudit matériau thermoplastique.

**11.** Ensemble comprenant :

- un tuyau (11) selon l'une quelconque des revendications 1 à 10,
- et un touret (15) autour duquel est enroulé ledit tuyau (11), à plat ou dans un état immédiatement proche d'un tel état à plat, non replié sur lui-même perpendiculairement à son axe longitudinal, le touret présentant une largeur (12) orientée perpendiculairement à l'axe longitudinal (110) dudit tuyau, cette largeur étant supérieure au demi-périmètre du tuyau dans un état circulaire de la section de ce tuyau.

**12.** Ensemble comprenant :

- un tuyau (11) selon l'une quelconque des revendications 1 à 10,
- et un touret (15) autour duquel est enroulé ledit tuyau (11), avec sa section aplatie, replié sur lui-même perpendiculairement à son axe longitudinal (110), le touret présentant une largeur (12) orientée perpendiculairement à l'axe longitudinal dudit tuyau, cette largeur étant inférieure au demi-périmètre du tuyau dans un état circulaire de la section de ce tuyau.

**13.** Ensemble comprenant

- un tuyau (11) selon l'une des revendications 1 à 10,
- et un conteneur (16) dans lequel le tuyau est plié en accordéon.

**14.** Assemblage de plusieurs tuyaux (11) selon l'une quelconque des revendications 1 à 10, aboutés deux à deux à l'endroit d'une zone de soudage (17) où au moins une partie des matériaux thermoplastiques des tuyaux (11) ont fusionné.

**Patentansprüche**

**1.** Schlauch (11), entlang einer Achse ausgestreckt, biegsam, der zum Transportieren von Süßwasser geeignet ist, der längs auf eine Haspel (15) aufgerollt oder in einen Behälter (16) gefaltet werden kann, längs kontinuierlich, mit kreisförmigem Querschnitt, wenn er unter positiven Differenzdruck zwischen dem Inneren des Schlauchs und dem Äußeren gesetzt wird, dessen Querschnitt sich auf sich selbst unter der Einwirkung eines negativen Differenzdrucks zusammendrücken kann, wobei der Schlauch einen Außendurchmesser (D1) aufweist, der zwischen 1 und 7 Meter liegt, und einen Mantel (1), der gegenüber der transportierten Flüssigkeit dicht ist, umfasst, **dadurch gekennzeichnet, dass** er eine Länge (L1) zwischen 200 und 3000 Metern umfasst und mindestens zwei umfängliche Verstärkungselemente (5a, 5b) umfasst, die die mechanische Festigkeit des Schlauchs bei einem positiven Differenzdruck steigern und ohne Bersten oder Spalten einem positiven Differenzdruck von 1 bis mindestens 10 x 10$^5$ Pa standhalten, **dadurch gekennzeichnet, dass** der Mantel und die Verstärkungselemente (5a, 5b) aus mindestens einem Thermoplastmaterial bestehen, das durch Fäden (3, 8) derart verstärkt ist, dass der Schlauch im Querschnitt von dem Inneren zu dem Äußeren innerhalb des Thermoplastmaterials Folgendes aufweist:

- eine erste Textillage (1) mit gestrickter, geflochtener, gewebter oder Vliesstruktur (2), die Längsfäden (30) aufweist, die zu der Längsachse (110) des Schlauchs parallel sind, dann um die erste Textillage (1),

- mindestens eine zweite, dann eine dritte Textillage (5a, 5b), jeweils:
- mit gestrickter, geflochtener, gewebter, Vlies- oder Einrichtungsstruktur (2),
- längs in Helix entlang der Achse (110) des Schlauchs aufgewickelt, und
- mit Längsfäden (80) parallel zu der Mantellinie der Helix.

2. Schlauch (11) nach Anspruch 1, der einen Außendurchmesser (D1) zwischen 1 und 5 Meter umfasst.

3. Schlauch (11) nach einem der vorstehenden Ansprüche, **dadurch gekennzeichnet, dass** seine Länge (L1) zwischen 300 und 1000 Meter liegt.

4. Schlauch (11) nach einem der vorstehenden Ansprüche, der pro Laufmeter eine Masse zwischen 14 kg/ml und 320 kg/ml gemäß dem Durchmesser und dem Berstdruck umfasst.

5. Schlauch (11) nach einem der vorstehenden Ansprüche, der eine röhrenförmige Wand (10) mit einer Stärke (E) zwischen 6 und 17 Millimeter gemäß dem Durchmesser und dem Berstdruck aufweist.

6. Schlauch (11) nach einem der vorstehenden Ansprüche, der die folgende Ungleichung einhält:

$$\frac{T}{P} \le \mu . \pi . R^2$$

wobei:

$$\mu = 0,9$$

T: axiale Bruchspannung unter Differenzdruck gleich null,
P: Berstdifferenzdruck zwischen dem Inneren und dem Äußeren des Schlauchs,
R: Innenradius des Schlauchs unter positivem Differenzdruck.

7. Schlauch (11) nach einem der vorstehenden Ansprüche, der einen positiven Berstdifferenzdruck zwischen 3 und 30 x $10^5$ Pa aufweist.

8. Schlauch (11) nach einem der vorstehenden Ansprüche, der:

- zwischen einem kreisförmigen Innenquerschnitt und einem Innenquerschnitt, der da abgeflacht ist, wo zwei entgegengesetzte Zonen des Innenumfangs einander berühren, verformbar ist,
- und auf sich selbst längs entlang eines abgeflachten Bands faltbar ist, das an der Stelle der Falten einen Krümmungsradius kleiner oder gleich 50 cm aufweist,

ohne dass der Berstdruck oder die axiale Bruchspannung unter Differenzdruck gleich null des Schlauchs um mehr als 5 % geändert werden:

- durch das Übergehen des kreisförmigen Innenquerschnitts zu dem abgeflachten Innenquerschnitt und umgekehrt,
- und durch das Falten auf sich selbst längs des Schlauchs entlang des abgeflachten Bands und sein Auffalten im flachen Zustand.

9. Schlauch (11) nach einem der vorstehenden Ansprüche, wobei:

- der Titer der Längsfäden (3, 8) zwischen 200 und 8500 tex liegt,
- und die Anzahl der Längsfäden kleiner ist als drei Fäden pro cm.

10. Schlauch (11) nach einem der vorstehenden Ansprüche, wobei im Wesentlichen an der Stelle des Durchmessers (112), an der sich die erste Textillage (1) befindet, die erste Textillage eine Überdeckungszone (111) durch sich selbst des Thermoplastmaterials aufweist.

11. Einheit, die Folgendes umfasst:

- einen Schlauch (11) nach einem der Ansprüche 1 bis 10,
- und eine Haspel (15), um die der Schlauch (11) flach oder in einem Zustand unmittelbar nahe einem solchen flachen Zustand, nicht auf sich selbst senkrecht zu seiner Längsachse zurückgefaltet, aufgewickelt ist, wobei die Haspel eine Breite (12) aufweist, die senkrecht zu der Längsachse (110) des Schlauchs ausgerichtet ist, wobei diese Breite größer ist als der halbe Umfang des Schlauchs in einem kreisförmigen Zustand des Querschnitts dieses Schlauchs.

12. Einheit, die Folgendes umfasst:

- einen Schlauch (11) nach einem der Ansprüche 1 bis 10,
- und eine Haspel (15), um die der Schlauch (11), mit seinem abgeflachten Querschnitt, auf sich selbst senkrecht zu seiner Längsachse (110) zurückgefaltet, aufgerollt ist, wobei die Haspel eine Breite (12) aufweist, die senkrecht zu der Längsachse des Schlauchs ausgerichtet ist, wobei diese Breite kleiner ist als der halbe Umfang des Schlauchs in einem kreisförmigen Zustand des Querschnitts dieses Schlauchs.

**13.** Einheit, die Folgendes umfasst

- einen Schlauch (11) nach einem der Ansprüche 1 bis 10,
- und einen Behälter (16), in dem der Schlauch in Akkordeonfalten gefaltet ist.

**14.** Zusammenfügen mehrerer Schläuche (11) nach einem der Ansprüche 1 bis 10, die zu je zwei an der Stelle einer Schweißzone (17), an der mindestens ein Teil der Thermoplastmaterialien der Schläuche (11) zusammengeschmolzen ist, aneinandergefügt sind.

**Claims**

**1.** Flexible pipe elongate along an axis, adapted to transport fresh water, able to be wound longitudinally on a drum (15) or folded in a container (16), longitudinally continuous, of circular section when there is a positive differential pressure between the interior of the pipe and the exterior, the section of which can be crushed on itself by the effect of a negative differential pressure, the pipe having an outside diameter (D1) between 1 and 7 metres inclusive and comprising an envelope (1) impermeable to the transported liquid, **characterized in that** it has a length (L1) between 200 and 3000 metres inclusive and comprises at least two peripheral reinforcing elements (5a, 5b) increasing the mechanical strength of the pipe relative to a positive differential pressure and the pipe withstands without bursting or splitting a positive differential pressure from 1 to at least 10 x $10^5$ Pa,
**characterized in that** the envelope and the reinforcing elements (5a, 5b) are made from at least one thermoplastic material reinforced with filaments (3,8) so that the pipe includes, in section, from the interior toward the exterior, within the thermoplastic material:

- a first textile layer (1) of knitted, braided, woven or non-woven structure (2), having longitudinal filaments (30) parallel to the longitudinal axis (110) of the pipe, then, around said first textile layer (1),
- at least one second then one third textile layers (5a, 5b) each:

   * of knitted, braided, woven, non-woven or unidirectional structure (2),
   * wound longitudinally in a helix along the axis (110) of the pipe, and
   * including longitudinal filaments (80) parallel to the generatrix of the helix.

**2.** Pipe according to Claim 1 or 2 having a diameter (D1) between 1 and 5 metres inclusive.

**3.** Length of a pipe according to any one of the preceding claims having a length (L1) between 300 and 1000 metres inclusive.

**4.** Pipe according to any one of the preceding claims, having a mass per linear metre between 14 kg/ml and 320 kg/ml inclusive depending on the diameter and the bursting pressure.

**5.** Pipe according to any one of the preceding claims, having a tubular wall (10) with a thickness (E) between 6 and 17 millimetres inclusive depending on the diameter and the bursting pressure.

**6.** Pipe according to any one of the preceding claims, respecting the following inequality:

$$\frac{T}{P} \leq \mu.\pi.R^2$$

with :

$$\mu = 0.9$$

   T: axial breaking tension at zero differential pressure,
   P: bursting differential pressure between the interior and the exterior of the pipe,
   R: inside radius of the pipe under positive differential pressure.

**7.** Pipe according to any one of the preceding claims, having a bursting pressure between 3 and 30 x $10^5$ Pa inclusive.

**8.** Pipe according to any one of the preceding claims, which is:

   - deformable between a circular internal section and a flattened internal section in which two opposite zones of the internal perimeter touch each other, and
   - foldable on itself longitudinally to form a flattened strip having, at the location of the folds, a radius of curvature less than or equal to 50 cm,

without the bursting pressure or the axial breaking tension under zero differential pressure of the pipe being modified more than 5%,

• by the passage from the circular internal section to the flattened internal section and vice versa, and
• by the folding of the pipe longitudinally on itself to form said flattened strip and unfolding it flat.

9. Pipe according to Claim 2, or said Claim 2 and any one of the preceding Claims 3 to 9, wherein:

- the denier of the longitudinal filaments (3,8) is between 200 and 8500 Tex inclusive, and
- the number of longitudinal filaments is less than three filaments per cm.

10. Pipe according to any one of Claims 1 to 10, wherein, substantially at the location of the diameter (112) at which the first textile layer (1) is situated, the first textile layer includes a zone (111) in which said thermoplastic material is overlapped on itself.

11. System comprising:

- a length of the pipe (11) according to any one of Claims 1 to 10, and
- a drum (15) around which said length is wound, flat or in a state immediately close to such a flat state, not folded on itself perpendicularly to its longitudinal axis, the drum having a width (12) oriented perpendicularly to the longitudinal axis (110) of said length of pipe, this width being greater than the half-perimeter of the pipe in a circular state of the section of this pipe.

12. System comprising:

- a length of the pipe (11) according to any one of Claims 1 to 10, and
- a drum (15) around which said length is wound, with its section flattened, folded on itself perpendicularly to its longitudinal axis (110), the drum having a width (12) oriented perpendicularly to the longitudinal axis of said length of pipe, this width being less than the half-perimeter of the pipe in a circular state of the section of this pipe.

13. System comprising:

- a length of the pipe (11) according to any one of Claims 1 to 11, and
- a container (16) in which the pipe is accordion-folded.

14. Assembly of a plurality of pipes according to any one of Claims 1 to 10, butt-jointed two by two at the location of a welding zone (17) where at least some of the aforementioned thermoplastic materials of the pipes (11) are fused.

FIG.1

FIG.2

FIG.3a

FIG.3b

FIG.4

FIG.5a

FIG.5b

FIG. 6

FIG. 7

FIG.8a

FIG.8b

FIG.9

FIG.10

## RÉFÉRENCES CITÉES DANS LA DESCRIPTION

**Documents brevets cités dans la description**

- US 6926037 B
- FR 2786246 A1